# EUROPÄISCHE PATENTANMELDUNG

(11) **EP 1 685 886 A1**
(43) Veröffentlichungstag der Anmeldung: **02.08.2006**
(21) Anmeldenummer: 03815286.4
(22) Anmeldetag: 15.12.2003
(51) Int. Cl.: B01D 15/00, B01D 15/08, G01N 30/02, G01N 30/96

(54) **ELEKTRODIALYSESUPPRESSOR FÜR IONENCHROMATOGRAPHIE**

(30) Priorität: 12.11.2003 RU 2003132804
(71) Anmelder: Pridantsev, Alexandr Alexeevich, Moscow, 119296 (RU); Shatalov, Igor Alexeevich, Moskovskaya obl. 142602 (RU); Gursky, Vladimir Sergeevich, Leningradskaya obl. 188540 (RU)
(72) Erfinder: Pridantsev, Alexandr Alexeevich, Moscow, 119296 (RU); Shatalov, Igor Alexeevich, Moskovskaya obl. 142602 (RU); Gursky, Vladimir Sergeevich, Leningradskaya obl. 188540 (RU)
(74) Vertreter: Jeck, Anton
(86) Internationale Anmeldenummer: PCT/RU2003/000558
(87) Internationale Veröffentlichungsnummer: WO 2005/046832

(57) **Zusammenfassung**

Die Erfindung betrifft einen elektrodialytischen Suppressor für die lonenchromatografie mit einem mit Ionenaustauschstoff in Form eines Gitters bzw. mit Harz gefüllten und auf beiden Seiten mit flachen Ionenaustauschmembranen begrenzten Elutionsmittelkanal, zwei Kanälen für eine Regenerierungslösung, die durch äußere (in Bezug auf den Elutionsmittelkanal) Oberflächen der Ionenaustauschmembranen und durch neutrale Lamellen gebildet und mit Gittern gefüllt werden, und zwei Elektroden in den Kammern mit der Regenerierungslösung. Gemäß der Erfindung wird jede Elektrode in Form einer elektronenleitenden Schicht auf der auf die Kammer mit der Regenerierungslösung ausgerichteten Membranoberfläche ausgeführt. Dadurch wird die Wärmeentwicklung in den Kanälen mit der Regenerierungslösung vermindert und somit die Wirksamkeit des Suppressors erhöht.

## Beschreibung

Die Erfindung gehört zum Bereich der ionenchromatografischen Analyse, insbesondere zum Bereich von Vorrichtungen zur Verminderung des Hintergrundsignals bei konduktometrischer Ionenbestimmung mittels IC.

Bei der ionenchromatografischen Analyse mit konduktometrischer Detektion werden als Elutionsmittel Säure-Elutionsmittel (Trennung und Analyse von Kationen) bzw. Alkali-Elutionsmittel (Trennung und Analyse von Anionen) eingesetzt. Zur Erhöhung der Analyseempfindlichkeit wird die Hintergrundleitfähigkeit des Elutionsmittels mittels Entfernung der ihre Leitfähigkeit bestimmenden Ionen aus dem Elutionsmittel unterdrückt. Das effektivere Verfahren der Leitfähigkeitsunterdrückung ist der Einsatz des elektrodialytischen Verfahrens mit Ionenaustauschmembranen.

Bekannt ist eine Vorrichtung zur elektrodialytischen Unterdrückung (Suppression) der Elutionsmittelleitfähigkeit aus dem US-Patent 4 459 357. In dieser Vorrichtung strömt das Elutionsmittel aus der chromatografischen Säule durch einen Kanal, der durch flache Ionenaustauschmembranen begrenzt ist. Auf den gegenüberliegenden Seiten der Membranen befinden sich Kanäle, die von einer Regenerierungslösung durchströmt werden. Die Membranen lassen Ionen mit gleicher Ladung hindurch, die ebenso die aus dem Elutionsmittel zu entfernenden Ionen aufweisen. Der elektrische Strom, der zwischen den Elektroden auf gegenüberliegenden Seiten der Kanäle für die Regenerierungslösung geführt wird, erhöht die Mobilität des Ionenaustausches. Das Problem eines solchen elektrodialytischen Membransuppressors besteht darin, dass eine sehr hohe Spannung (50-500V) erforderlich ist. Bei der Entionisierung des Elutionsmittels nimmt der elektrische Widerstand zu, und viel Wärme wird erzeugt. Dies stört eine wirksame Detektion, da das Hintergrundrauschen ansteigt und die Empfindlichkeit abnimmt.

Bekannt ist ferner eine Vorrichtung aus dem US-Patent 4 999 098. Bei dieser Vorrichtung umfasst der Suppressor mindestens eine Regeneriermittelkammer und eine chromatografische Elutionsmittelkammer, die voneinander mittels einer lonenaustauschmembran getrennt sind. Die Membran lässt nur Ionen mit derselben Ladung und auch die auszutauschenden Ionen hindurch. In den Regeneriermittel- und Elutionsmittelkammern sind Ionenaustauschgitter angeordnet. Die Gitter in den Kanälen sichern die Strömung der Lösungen im gesamten Kanalquerschnitt. In einer anderen Ausführungsart besitzt der Suppressor eine zweite Membran, die der ersten Membran gegenüberliegt und die Grenze der zweiten Regeneriermittelkammer bildet. Elektroden sind in den beiden Regeneriermitellkammern entlang der Länge des Suppressors zwischen den Ionenaustauschgittern und der durchgehenden Wand der Kammern angeordnet.

Als ein Ausführungsbeispiel der Vorrichtung wird im Patent der Einsatz von lonenaustauschmembranen in Form von ineinander eingesetzten Rohren betrachtet. Der Raum zwischen den Rohren ist dabei die Elutionsmittelkammer; der Innenhohlraum des Rohrs mit dem kleineren Durchmesser ist die erste Regeneriermittelkammer, in der eine Elektrode in Form eines entlang des Rohrs gelegten Drahts angeordnet ist. Der Hohlraum zwischen der Außenoberfläche des Ionenaustauschrohrs mit dem größeren Durchmesser und dem inerten, rohrförmigen Außengehäuse bildet eine zweite Regeneriermittelkammer. Als zweite Elektrode kann patentgemäß das inerte Außengehäuse aus rostfreiem Stahl eingesetzt werden. Die Elutionsmittekammer und die Regeneriermittelkammer werden mit Ionenaustauschharz gefüllt.

Das Patent sieht vor, eine typische Regenerierungslösung (Säure oder Base) durch die Kammern (Kanäle) laufen zu lassen und die Regeneriermittel aus einer Quelle zu liefern. Im Patent wird auch die Möglichkeit betrachtet, Wasser oder eine Lösung aus dem konduktometrischen Detektor der Ionenchromatografieeinrichtung als Regenerierungslösung einzusetzen.

Die Besonderheit des Suppressoraufbaus in diesem Patent ist das lonenaustauschmaterial in den Kanälen (Kammern) der Vorrichtung in Form von lonenaustauschgittern bzw. Ionenaustauschharz. Beim Anlegen einer elektrischen Spannung an die Elektroden nimmt die Unterdrückungsfähigkeit der Vorrichtung zu. Das sich in den Kanälen befindende Ionenaustauschmaterial verringert den elektrischen Widerstand der Kanäle wesentlich.

In der genannten Vorrichtung werden höhere Ströme zur Erzielung einer quantitativen Unterdrückung als theoretisch berechnete Ströme erforderlich. Bei hoher Elutionsmittelkonzentration führen hohe Ströme zu starker Wärmeerzeugung und starkem Hintergrundrauschen, wodurch die analytischen Daten der chromatografischen Analyse verschlechtert werden.

Als Prototyp für die vorliegende Erfindung wurde eine Vorrichtung nach dem US-Patent 6 077 434 ausgewählt. Die Lage der Ionenaustauschmembranen, Kanäle, Gitter und Elektroden in der Vorrichtung ist dem vorgehenden Patent ähnlich. Im Patent werden mehrere Beispiele zur Verringerung der Wärmeerzeugung in den Kanälen und somit zur Steigerung der Wirksamkeit des Stromeinsatzes u.a. genannt:
1. Einsatz von Gitterzwischenschichten mit Ionenaustauscheigenschaften bzw. anderen Füllmaterialien mit Ionenaustauscheigenschaften (beispielsweise lonenaustauschharz) in den Zwischenmembran- (Elutionsmittelkammer) und Elektrodenkammern (Regenerierkammern). In diesem Fall wird die Widerstandsabnahme in den Kammern wesentlich verringert. Dies ist damit verbunden, dass der elektrische Widerstand der Ionenaustauschmaterialien, nämlich des Ionenaustauschharzes und des Ionenaustauschgitters, wesentlich niedriger als der elektrische Widerstand von Wasserlösungen ist, die als Elutionsmittel und Regeneriermittel eingesetzt werden.
2. Einsatz eines Gegenstroms im Prozess, in dem Elutionsmittel und Regeneriermittel, die die Elektrodenkammern spülen, entgegenwandern; in diesem Fall wird der elektrische Gesamtwiderstand der Lösungsschichten auf der ganzen Länge der Suppressorvorrichtung ausgeglichen (in der Elutionsmittellösung wird die Ionenkonzentration auf dem Wege durch die Kammer verringert und die der Regenerierungslösung erhöht).
3. Einsatz von Membranen mit unterschiedlicher Durchlässigkeit der Ionen, die im Austauschprozess mitwirken. Dies gleicht die Wärmeerzeugung entlang der Suppressorvorrichtung aus.
4. Einsatz von zwei oder mehreren unabhängigen Stromquellen und mehreren unabhängigen Elektroden in jeder Elektrodenkammer, wobei in dem Kanalabschnitt mit höher konzentrierten Lösungen der größere Strom und in den Abschnitten mit weniger konzentrierten Lösungen der kleinere Strom eingestellt wird.
5. kombinierter Einsatz der Punkte1-4.

Der Nachteil des Prototyps ist eine höhere Wärmeentwicklung in den Kanälen mit der Regenerierungslösung. Die im Patent vorgeschlagene Wirksamkeitserhöhung des Stromeinsatzes beseitigt den wichtigsten Grund einer höheren Wärmeentwicklung in der Vorrichtung nicht. Beim Anlegen der elektrischen Spannung in den Elektrodenkammern der Vorrichtung wird infolge der Wasserelektrolyse Gas intensiv freigesetzt, und der elektrische Widerstand der Schicht einer solchen Lösung wird vor allem durch den Faktor der Gasfüllung bedingt. In den Schlitzvorrichtungen, zu denen auch die genannten Suppressoren gehören, führt dies zu einem mehrfachen Anstieg des elektrischen Widerstands in den Lösungsschichten.

Das Ziel der vorliegenden Erfindung ist die Beseitigung der genannten Nachteile. Das gesetzte Ziel wird dadurch erreicht, dass im elektrodialytischen Suppressor für die Ionenchromatografie, Folgendes vorgesehen ist:
- ein Elutionsmittelkanal, der durch die Ionenaustauschmembranen getrennt und mit dem Ionenaustauschmaterial (Ionenaustauschgitter, lonenaustauschharz) gefüllt ist;
- Regenierungslösungskanäle, gefüllt mit einem inerten Gitter;
- Elektroden in den Regenerierungslösungskanälen, die in Form einer elektronenleitenden Palladium- bzw. Platinschicht auf der lonenaustauschmembranoberfläche ausgeführt werden, die auf die Regenerierungslösungskammern ausgerichtet sind, wobei die Elektroden als poröse Schicht ausgebildet sind, die auf die Membran mittels Ablagerungsverfahren aufgetragen werden.

Die Erfindung wird durch die beigefügten Zeichnungen erläutert, die die Vorrichtung gemäß der Erfindung, ihren Einsatz und die Einsatzergebnisse schematisch darstellen. Es zeigen:
- Fig.1: eine Vorrichtung mit flachen Ionenaustauschmembranen in schematischer Darstellung,
- Fig. 2: eine schematische, perspektivische Explosionsdarstellung zum Zusammenbau und luftdichten Verschließen von beispielhaften Kanälen der Vorrichtung mit flachen Membranen,
- Fig. 3: einen schematischen Querschnitt durch konzentrische Rohre einer Vorrichtung gemäß der Erfindung mit Ionenaustauschmembranen,
- Fig. 4: einen schematischen Längsschnitt durch Kanäle einer Vorrichtung gemäß der Erfindung mit den konzentrischen Rohrmembranen als Beispiel für den Zusammenbau und luftdichten Verschluss,
- Fig. 5: schematisch die Flußausrichtung und Ionenübertragung zum Entfernen der Kationen aus dem Elutionsmittelfluss, d.h. Minderung (Suppression) der Stromleitfähigkeit des Alkali-Elutionsmittel bei Durchführung der chromatografischen Anionenanalyse,
- Fig. 6: schematisch die Flußausrichtung zum Entfernen der Anionen aus dem Elutionsmittelfluss, d.h. Minderung der Stromleitfähigkeit des Säure-Elutionsmittel bei Durchführung der chromatografischen Kationenanalyse,
- Fig. 7: schematisch ein Chromatogramm der Trennung von Anionen mittels der Vorrichtung gemäß der Erfindung mit flachen Kationenaustauschmembranen,
- Fig. 8: schematisch ein Chromatogramm der Trennung von Anionen mittels der Vorrichtung gemäß der Erfindung mit rohrförmigen Kationenaustauschmembranen und

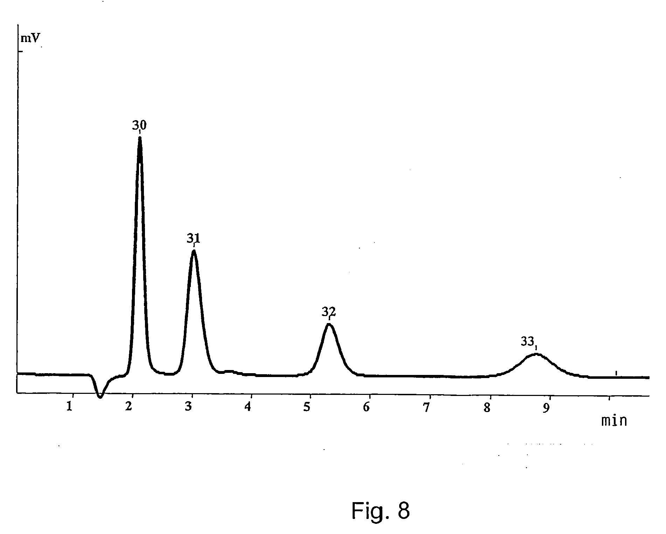

- Fig. 8: schematisch ein Chromatogramm der Trennung von Kationen mittels der Vorrichtung gemäß der Erfindung mit flachen Anionenaustauschmembranen.

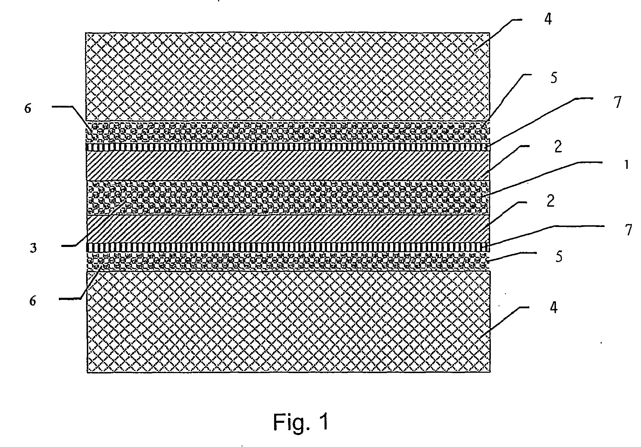

In Fig. 1 wird ein Schlitzkanal 1 des Elutionsmittels mittels zweier flacher lonenaustauschmembranen 2 gebildet und mit einem Ionenaustauschgitter 3 gefüllt. Die Außenseiten der Membranen 2 und neutrale flache Platten 4 bilden Kanäle für eine Regenerierungslösung 5. Diese Kanäle für die Regenerierungslösung sind mit Gittern 6 gefüllt. Das Ionenaustauschgitter 3 und die Gitter 6 stellen die Steifheit der Kanalgeometrie der Vorrichtung und eine Mischung der zugeführten Lösungen im Querschnitt sicher. Das Ionenaustauschgitter 3 stellt außerdem eine Verringerung des elektrischen Widerstands der Vorrichtung sicher. Auf der Membranoberfläche seitens der Regenerierungskanäle ist eine poröse, elektronenleitende Schicht 7 aufgetragen, die als Elektrode arbeitet. Die Schicht wird aus Palladium bzw. Platin mittels Ablagerung auf der Membranoberfläche hergestellt.

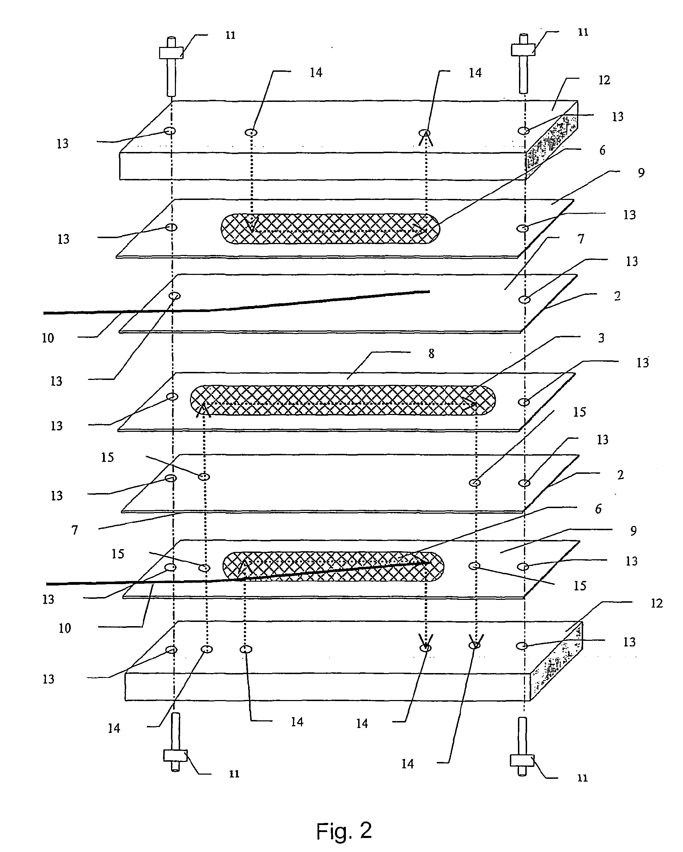

In Fig. 2 sind der Zusammenbau und das Hermetisieren der Kanäle in der Vorrichtung mit flachen Membranen schematisch dargestellt. Der Elutionsmittelkanal der Vorrichtung mit flachen Membranen wird mit einem Ionenaustauschgitter 3 gebildet. Um den Umfang weist das Gitter 3 eine hermetische Dichtung 8 auf. Auf beiden Seiten sind auf das Gitter 3 Ionenaustauschmembranen 2 mit aufgetragener, poröser, elektronenleitender Schicht 7 seitens des Regenerierungsmittelkanals eingebettet. Auf beiden Seiten der Membranen 2 werden Gitter 6 mit einer hermetischen Dichtung 9 um den Gitterumfang angeordnet. Zwischen dem Gitter 6 und der elektronenleitender Membranschicht 7 ist jeweils ein Platindraht 10 gelegt, der Strom führt. Der ganze Aufbau wird mittels Stiften 11 mit Muttern und neutralen Lamellen 12, die Öffnungen 13 aufweisen, durch die die Stifte 11 durchgeführt werden, in eine einheitliche Vorrichtung zusammengezogen. Der Einlauf und der Auslauf der Lösungen aus der Vorrichtung wird über Kanäle 14 in den neutralen Lamellen und über Öffnungen 15 gewährleistet, die in den Ionenaustauschmembranen 2 und hermetischen Dichtungen 8, 9 angeordnet sind.

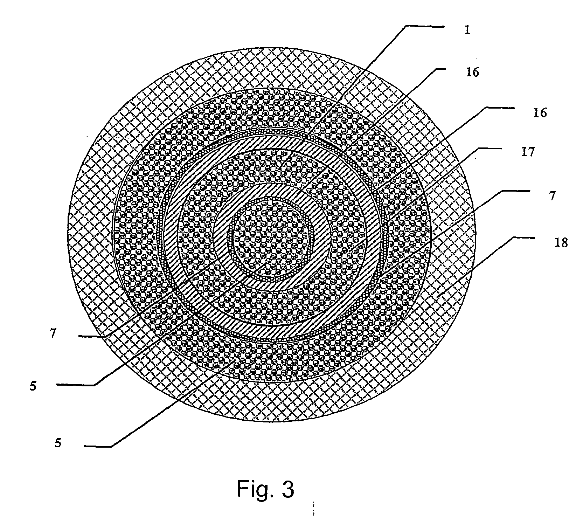

In der Vorrichtung in Fig. 3 wird der Elutionsmittelkanal 1 mit zwei ineinandergesetzten Ionenaustauschrohren 16 unterschiedlicher Querschnitte gebildet. Zur Sicherstellung einer konstanten Kanalgeometrie und einer Verminderung des elektrischen Widerstands wird der Elutionsmittelkanal 1 mit Ionenaustauschharz 17 in Form von Bällchen gefüllt. Auf die Innenseite des Ionenaustauschrohrs 16 kleineren Querschnitts und auf die Außenseite des Ionenaustauschrohrs 16 größeren Querschnitts sind poröse, elektronenleitende Schichten 7 aufgetragen, die als Elektroden der Vorrichtung dienen. Konzentrische Ionenaustauschrohre 16 werden in ein Rohr 18 aus einem neutralen Stoff eingesetzt. Der Hohlraum des Rohrs 16 kleineren Querschnitts bildet einen ersten Kanal für die Regenerierungslösung 5. Der Hohlraum zwischen der Außenoberfläche des Ionenaustauschrohrs 16 kleineren Querschnitts und der Innenoberfläche des Ionenaustauschrohrs 16 größeren Querschnitts bildet einen zweiten Kanal der Regenerierungslösung 5.

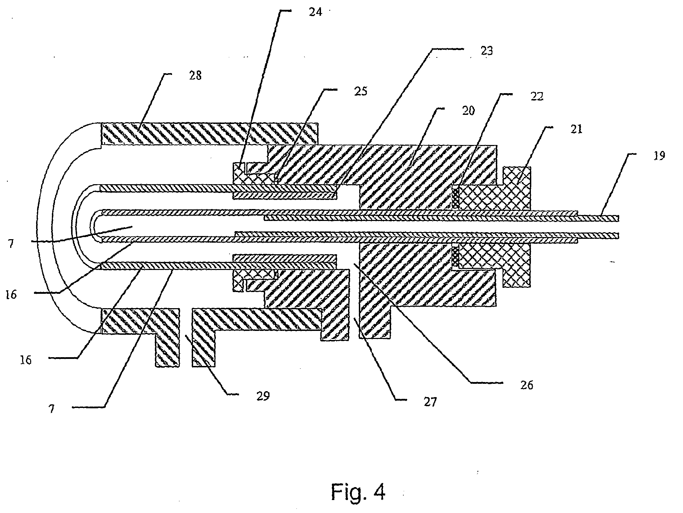

In Fig. 4 sind der Zusammenbau und das Hermetisieren der Kanäle der Vorrichtung mit konzentrischen Rohrmembranen schematisch dargestellt; in dieser Figur ist eine der zwei identischen Einheiten der Vorrichtung abgebildet.

In die Stirnseite des Ionenaustauschrohrs 16 kleineren Querschnitts mit der innenseitigen, porösen, elektronenleitenden Schicht 7 wird eine Kapillare 19 aus Metall, beispielsweise aus rostfreiem Stahl, eingeführt. Diese Kapillare 19 dient zur Stromabführung und stellt die Steifheit des Ionenaustauschrohrs 16 kleineren Querschnitts bei einer Abdichtung in einem T-Stück 20 aus einem neutralen, inerten Material mittels eines Stutzens 21 und einer hermetischen Dichtung 22 sicher. Außerdem wird die Lösung über die Kapillare 19 zum Kanal der Regenerierungslösung zugeführt.

In die Stirnseite des Ionenaustauschrohrs 16 größeren Querschnitts mit der außenseitigen, porösen, elektronenleitenden Schicht 7 wird eine Kapillare 23 aus neutralem Material eingeführt. Diese Kapillare stellt die Steifheit des Ionenaustauschrohrs 16 größeren Querschnitts bei der Abdichtung im T-Stück 20 mittels eines Stutzens 24 und einer hermetischen Dichtung 25 sicher. Der innere Querschnitt der Kapillare 23 ist größer als der Außenquerschnitt des Ionenaustauschrohrs 16 kleineren Querschnitts, wodurch der Elutionsmittelfluss im Zwischenraum der Rohre 26 mit dem Einsatz eines Stutzens 27 gewährleistet. Der Stutzen 24 aus rostfreiem Stahl dient gleichzeitig als zweiter Stromableitung in der Vorrichtung. Die Füllung des Zwischenraums der Rohre (Elutionsmittelkanal) mit dem Harz erfolgt durch Pumpen einer Suspension des Ionenaustauschharzes in Wasser durch den Zwischenraum der Rohre bis zum vollständigen Füllen des Kanals mit dem Harz. Das Außengehäuse der Vorrichtung bildet ein Rohr 28 aus neutralem Material, das mittels des T-Stücks 20 hermetisch verbunden ist. Im Rohr 28 ist ein Stutzen 29 zur Sicherstellung des Lösungsflusses im zweiten Kanal der Regenerierungslösung angeordnet.

Das Auftragen der elektronenleitenden Schichten auf die Oberfläche der lonenaustauschmembranen wurde mittels chemischer Ablagerung auf der Membranoberfläche durchgeführt. Als elektronenleitende Schichten wurden Schichten aus Platin oder Palladium eingesetzt. Die Auswahl der Materialien ist durch die hohe chemische Beständigkeit von Platin bzw. Palladium bestimmt, die als Anoden und Kathoden in den eingesetzten Lösungen benutzt werden. Zum Auftragen der elektronenleitenden Schichten kann beispielsweise folgendes Verfahren verwendet werden. Die Membran wird im Laufe von 1-2 Stunden in Wasser zum Anschwellen gewässert. Danach kommt die Membranoberfläche, auf die die Metallschicht aufgetragen wird, in Kontakt mit einer Lösung folgender Zusammensetzung:
5g/l Palladiumchlorid,
100g/l Ammoniumhydroxid,
Kontaktzeit 20 Minuten.

Danach wird die Membranoberfläche mit Wasser durchgespült und in Kontakt mit einer bis 80°C erwärmten Hydrasinlösung (100g/l) für eine Minute gebracht. Als Ergebnis bildet sich auf der Membranoberfläche eine katalytische Palladiumschicht.

Zur elektronenleitenden Palladiumbeschichtung wird die Membranoberfläche mit der aufgetragenen, katalytischen Schicht in Kontakt mit einer Lösung folgender Zusammensetzung gebracht:
4g/l Palladiumchlorid,
300mg/l Ammoniumhydroxid (25%),
12g/l Trilon B,
2g/l Hydrasin.

Die Temperatur der Lösung beträgt 20°C. Das Hydrasin wird der Lösung unmittelbar vor dem Einsatz zugegeben. Die Kontaktzeit der Membranoberfläche mit der Lösung beträgt 2-4 Stunden. Eine kürzere Kontaktzeit führt zur Bildung einer elektronenleitenden Schicht mit einem hohen elektrischen Widerstand. Eine längere Kontaktzeit führt zur Bildung einer nicht porösen Palladiumschicht, die die lonenübertragung durch die Membran in den Kanal der Vorrichtung behindert.

Zur elektronenleitenden Platinbeschichtung wird die Membranoberfläche mit der aufgetragenen, katalytischen Palladiumschicht in Kontakt mit einer Lösung folgender Zusammensetzung gebracht:
40g/l (NH₄)₂PtCl₆,
320g/l NH₄Cl.

Die Temperatur der Lösung beträgt 50°C. Die Kontaktzeit der Membranoberfläche mit der Lösung ist 2-4 Stunden. Eine kürzere Kontaktzeit führt zur Bildung einer elektronenleitenden Schicht mit einem hohen elektrischen Widerstand. Eine längere Kontaktzeit führt zur Bildung einer nicht porösen Platinschicht, die die lonenübertragung durch die Membran aus dem Kanal in den Kanal der Vorrichtung behindert.

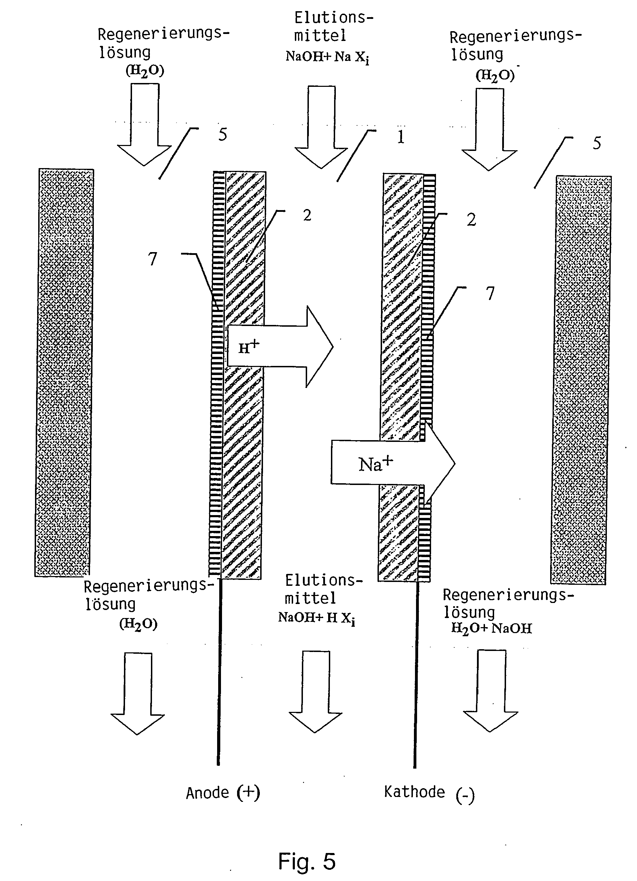

Die Vorrichtung zum Entfernen von Kationen aus dem Elutionsmittel arbeitet in folgender Weise (Fig. 5). Als Membranen werden Kationenaustauschmembranen 2 eingesetzt, die nur kationische Elutionsmittelarten durchlassen. Auf die entsprechenden Membranseiten sind poröse, elektronleitende Palladium- bzw. Platinschichten 7 aufgetragen, die als Anode oder Kathode dienen. Das Elutionsmittel ist eine Alkalilösung; beispielsweise enthält die Natriumhydroxid-Lösung NaOH nach dem Fluss durch die Trennsäule Lösungen NaXi, wobei Xi auf der Säule getrennte Anionen enthält. Das Elutionsmittel wandert in den Elutionsmittelschlitzkanal 1 der Vorrichtung. Den Kanälen der Regenerierungslösung wird Wasser zugeführt. Beim Anlegen eines elektrischen Felds an die Elektroden 7 der Vorrichtung wandern die Natriumionen aus dem Elutionsmittelkanal zur Kathode und gelangen über die poröse Kathode in den Regenerierungskanal. Da die Anionen über die Kationenaustauschmembran nicht übertragen werden, wird eine äquivalente Anzahl von Wasserstoffionen in den Elutionsmittelkanal zur Aufrechterhaltung der elektrischen Neutralität übertragen; die Wasserstoffionen werden durch folgende Elektrodenzersetzungsreaktion des Wassers an der Anode gebildet:

H₂O - 2e⁻ → 2H⁺ + ½O₂ ↑.

Als Ergebniss fließt aus dem Elutionsmittelkanal das Wasser mit den Lösungen Hxi aus, das zum konduktometrischen Detektor weiterströmt. Somit stellt das Elutionsmittel vor der Suppression eine Natriumhydroxidlösung mit Lösungen von Analytkomponenten Xi in Form von NaXi dar, und nach der Suppression ist das das Wasser mit Lösungen von HXi.

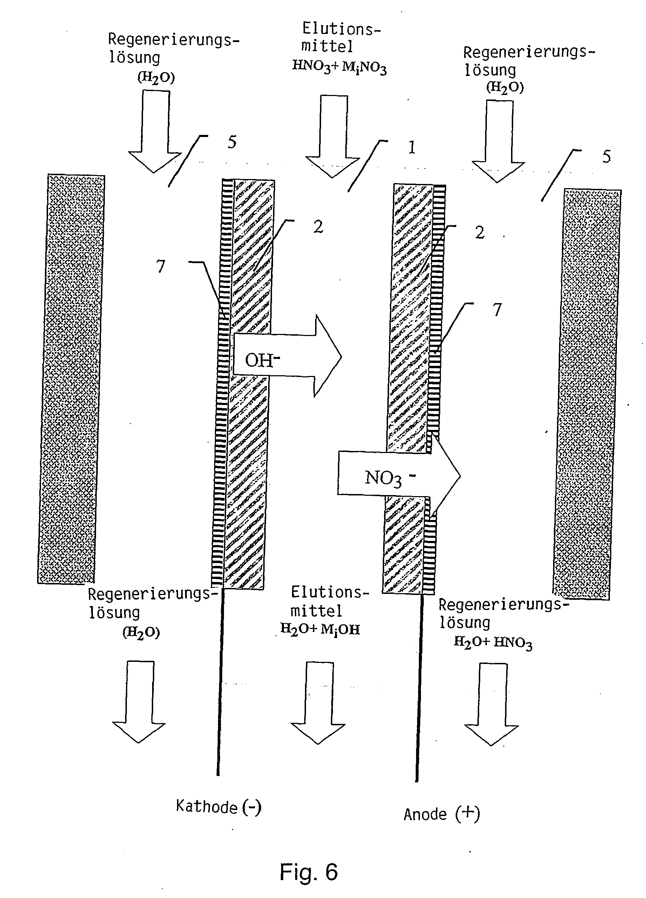

Die Vorrichtung zum Entfernen von Anionen arbeitet in folgender Weise (Fig. 6). Als Membranen werden Anionenaustauschmembranen 2 eingesetzt, die nur anionische Elutionsmittelarten hindurchlassen. Auf die entsprechenden Membranseiten sind poröse, elektronenleitende Palladium- bzw. Platinschichten 7 aufgetragen. Das Elutionsmittel ist eine Säurelösung, beispielsweise Salpetersäure HNO₃, und enthält nach dem Fluss durch die Trennsäule Lösungen MiNO₃, wobei Mi auf der Säule getrennte Kationen enthält. Das Elutionsmittel gelangt in den Elutionsmittelschlitzkanal 1 der Vorrichtung. Den Kanälen 5 der Regenerierungslösung wird Wasser zugeführt. Beim Anlegen eines elektrischen Felds an die Elektroden 7 der Vorrichtung wandern die Nitrationen aus dem Elutionsmittelkanal zur Anode und werden in den Regenerierungskanal übertragen. Da Kationen über die Anionenaustauschmembran nicht übertragen werden, wird eine äquivalente Anzahl von Hydroxidionen in den Elutionsmittelkanal zur Aufrechterhaltung der elektrischen Neutralität übertragen, wobei die Hydroxidionen infolge der Elektrodenzersetzungsreaktion des Wassers an der Kathode in folgender Weise gebildet werden:
2H₂O + 2e⁻ → 2OH⁻ + H2 ↑.

Infolgedessen. fließt aus der Elutionsmittelkammer das Wasser mit den Lösungen MiOH aus, die zum konduktometrischen Detektor weiterströmt.

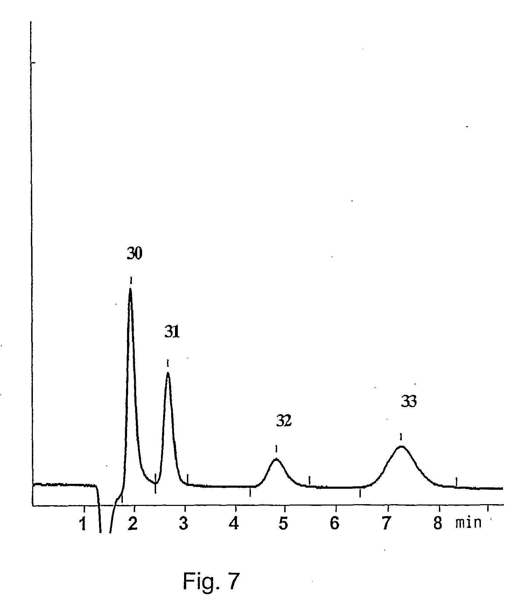

In Fig. 7 ist ein Chromatogramm der Anionentrennung mittels der Vorrichtung gemäß der Erfindung mit flachen Kationenaustauschmembranen dargestellt. Die Trennungsbedingungen sind folgende:
Probe: Anionengemisch mit Konzentrationen 1mg/l: Fluorid 30, Chlorid 31, Nitrat 32,
Sulfat 33
Probenvolumen 100µl
Trennsäule Aquiline A1 4,6*150mm
Elutionsmittel Natriumbicarbonat 0,0018 mol/l + Natriumcarbonat 0,0017 mol/l
Flussrate 1,5 mL/min
Konduktometrischer Detektor SD-51 0
Suppressor mit flachen Kationenaustauschmembranen, Suppressorstrom 12 mA,
Suppressorspannung 2,8 V.

Wie aus Fig. 7 ersichtlich ist, wird eine gute Trennung von Anionen mit minimalem Rauschen und minimaler Verschiebung der Grundlinie beobachtet.

In Fig. 8 ist ein Chromatogramm der Anionentrennung mittels der Vorrichtung gemäß der Erfindung mit rohrförmigen Kationenaustauschmembranen dargestellt. Die Trennungsbedingungen sind folgende:
Probe: Anionengemisch mit Konzentrationen 50mg/l: Fluorid 30, Chlorid 31, Nitrat 32, Sulfat 33
Probenvolumen 500µl
Trennsäule Aquiline A1 4,6*150mm
Elutionsmittel Natriumbicarbonat 0,0018 mol/l + Natriumcarbonat 0,0017 mol/l
Flussrate 1,5 ml/min
Konduktometrischer Detektor SD-510
Suppressor mit rohrförmigen Kationenaustauschmembranen, Suppressorstrom 12 mA, Suppressorspannung 3,2 V.

Wie aus Fig. 8 ersichtlich ist, wird eine gute Trennung von Anionen mit minimalem Rauschen und minimaler Verschiebung der Grundlinie beobachtet.

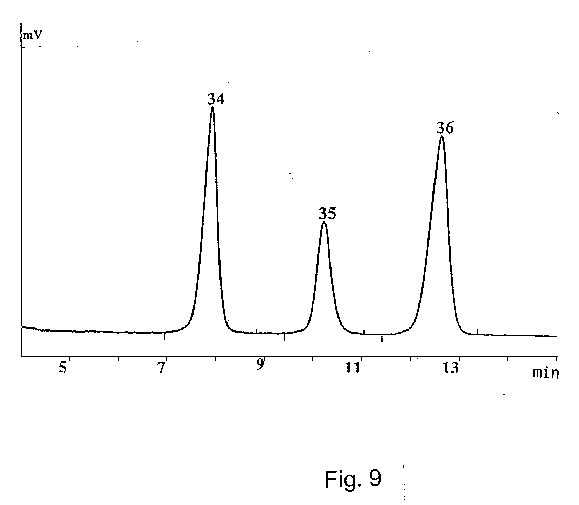

In Fig. 9 ist ein Chromatogramm der Kationentrennung mittels der Vorrichtung gemäß der Erfindung mit flachen Anionenaustauschmembranen dargestellt. Die Trennungsbedingungen sind folgende:
Probe: Kationengemisch mit Konzentrationen 5mg/l: Natrium 34, Litium 35, Kalium 36
Probenvolumen 100µl
Trennsäule Aquiline CIP 4,6*100mm
Elutionsmittel Salpetersäure 4*10⁻³ mol/l
Flußrate 1,0ml/min
Konduktometrischer Detektor CD-510
Suppressor mit flachen Anionenaustauschmembranen, Suppressorstrom 9 mA,
Suppressorspannung 3,5 V.

Wie aus Fig. 9 ersichtlich ist, wird eine gute Trennung von Anionen mit minimalem Rauschen und minimaler Verschiebung der Grundlinie beobachtet.

Der Stromwert, bei der die benötigten Ionen aus dem Elutionsmittel vollständig entfernt werden, wird von der Elutionsmittelkonzentration und der Flussrate des Elutionsmittels bestimmt und nach dem Faraday-Gesetz berechnet. Für normale Bedingungen der chromatografischen Trennung (Flussrate 1-2ml/min, Elutionsmittelkonzentration 0,003-0,1mol/l) beträgt der benötigte Stromwert 5-250mA.

Die Spannungsabnahme in der Vorrichtung setzt sich bei dem vorgegebenen Stromwert aus der Spannungsabnahme an den Elektroden (elektrochemische Reaktionen), Spannungsabnahme in den Ionenaustauschmembranen und Spannungsabnahme in den Lösungsschichten zwischen den Elektroden zusammen.

In der Vorrichtung gemäß der Erfindung wird die Wärmeentwicklung beim Stromanlegen ausschließlich durch den elektrischen Widerstand der Lösung im Elutionsmittelkanal und den der Ionenaustauschmembranen sowie durch die Spannungsabnahme an den Elektroden bestimmt. In den Vorrichtungen, die als Prototyp gewählt wurden, wird dazu noch der elektrische Widerstand der Lösungen in den Kanälen mit Regenerierungslösung hinzugefügt.

Besonders wirksam ist der Einsatz der Vorrichtung gemäß der Erfindung in dem Fall, in dem als Regenerierungslösung ein Elutionsmittel eingesetzt wird, das aus dem konduktometrischen Detektor ausfließt (Wasser). Der Einsatz eines solchen Flusses vereinfacht die Konfiguration der Ionenchromatografieeinrichtung, d.h. es erübrigt sich, eine spezielle Regenerierungslösung und eine Pumpe einzusetzen, die das Pumpen der Lösung durch die Kanäle gewährleistet. Mit dem Einsatz der Vorrichtung gemäß der Erfindung vermindert sich die Wärmeentwicklung um das Dreifache im Vergleich zu der bekannten, ähnlichen Vorrichtung.

Kein Einfluss der Gasentwicklung auf Spannung und Strom der Vorrichtung ermöglicht, die Vorrichtung gemäß der Erfindung in der ionenchromtografischen Analyse im Gradientenbetrieb erfolgreicher einzusetzen, wobei als Elutionsmittel eine Lösung mit der mit der Zeit zunehmenden Elutionsmittelkonzentration eingesetzt wird. Die zur vollständigen Suppression der Hintergrundleitfähigkeit benötigte Stromzunahme führt in den bekannten, ähnlichen Vorrichtungen und im Prototyp zur Erhöhung der Gasfreisetzung und folglich zur Erhöhung des Widerstands der Vorrichtung sowie somit zur Erhöhung der Wärmeentwicklung, die die Grundlinie stört. Beim Einsatz der Vorrichtung gemäß der Erfindung nimmt die Gasfreisetzung keinen Einfluss auf die Spannungs- und Stromwerte der Vorrichtung.

Außerdem erlaubt der Einsatz der Vorrichtung gemäß der Erfindung, den Prozess der chromatografischen Analyse zu intensivieren, weil höhere Elutionsmittelkonzentrationen und höhere Flussraten unter Beibehaltung von akzeptablen Detektionsbedingungen (niedriges Rauschen und niedrige Verschiebung der Grundlinie) eingesetzt werden.

Die Vorrichtung gemäß der Erfindung kann außer für die Ionenchromatografie in der Probenaufbereitung von Wasserlösungen zum Entfernen von störenden lonenkomponenten eingesetzt werden.

Verwendete Informationsquellen:
1. US-Patent 4 459 357
2. US-Patent 4 999 098
3. US-Patent 6 077 434

## Patentansprüche

1. Elektrodialytischer Suppressor für die Ionenchromatografie mit
- einem mit Ionenaustauschstoff in Form eines Gitters (3) bzw. mit Harz (17) gefüllten und auf beiden Seiten mit flachen Ionenaustauschmembranen (2) begrenzten Elutionsmittelkanal (1),
- zwei Kanälen für eine Regenerierungslösung (5), die durch äußere (in Bezug auf den Elutionsmittelkanal) Oberflächen der Ionenaustauschmembranen (2) und durch neutrale Lamellen (12) gebildet und mit Gittern (6) gefüllt werden,
- zwei Elektroden (10) in den Kammern mit der Regenerierungslösung (5),
**dadurch gekennzeichnet,**
**dass** jede Elektrode in Form einer elektronenleitenden Schicht (7) auf der zur Kammer mit der Regenerierungslösung (5) ausgerichteten Membranoberfläche ausgeführt wird.

2. Elektrodialytischer Suppressor nach Anspruch 1,
**dadurch gekennzeichnet,**
**dass** die elektronenleitende Schicht (7) in Platin bzw. Palladium ausgeführt ist.

3. Elektrodialytischer Suppressor nach Anspruch 1,
**dadurch gekennzeichnet,**
**dass** die elektronenleitende Schicht (7) auf der Membranoberfläche mittels des Ablagerungsverfahrens gebildet ist.

4. Elektrodialytischer Suppressor nach Anspruch 1,
**dadurch gekennzeichnet,**
**dass** die elektronenleitende Schicht (7) porös ausgebildet ist.

5. Elektrodialytischer Suppressor für die Ionenchromatografie mit
- einem Elutionsmittelkanal (1), der mit zwei Ionenaustauschmembranen in Form von Rohren (16) unterschiedlichen Querschnitts gebildet ist, die ineinander eingesetzt und mit Ionenaustauschmaterial in Form eines Gitters (3) bzw. Harz (17) gefüllt werden,
- zwei Elektroden (10) in den Kammern mit einer Regenerierungslösung (5),
**dadurch gekennzeichnet,**
**dass** jede Elektrode in Form einer elektronenleitenden Schicht (7) auf der zur Kammer mit der Regenerierungslösung (5) ausgerichteten Membranoberfläche ausgeführt wird.

6. Elektrodialytischer Suppressor nach Anspruch 5,
**dadurch gekennzeichnet,**
**dass** die elektronenleitende Schicht (7) in Palladium bzw. Platin ausgeführt ist.

7. Elektrodialytischer Suppressor nach Anspruch 5,
**dadurch gekennzeichnet,**
**dass** die elektronenleitende Schicht (7) auf der Membranoberfläche mittels des Ablagerungsverfahrens gebildet ist.

8. Elektrodialytischer Suppressor nach Anspruch 5,
**dadurch gekennzeichnet,**
**dass** die elektronenleitende Schicht (7) porös ausgebildet ist.
